# EUROPÄISCHE PATENTSCHRIFT

(11) **EP 0 726 307 B1**
(45) Veröffentlichungstag und Bekanntmachung des Hinweises auf die Patenterteilung: **24.11.1999**
(21) Anmeldenummer: 95101914.0
(22) Anmeldetag: 13.02.1995
(51) Int. Cl.: C10J 3/66, C10J 3/82

(54) **Verfahren zum Beseitigen organischer Schadstoffreste in bei der Müllvergasung anfallendem Synthesegas**
Process for eliminating organic harmful substances in synthesis gas obtained by the gasification of municipal waste refuse
Procédé pour éliminer des substances organiques nocives dans le gaz de synthèse produit par la gazeification de déchets municipaux

(43) Veröffentlichungstag der Anmeldung: 14.08.1996
(73) Patentinhaber: THERMOSELECT AKTIENGESELLSCHAFT, FL-9490 Vaduz (LI)
(72) Erfinder: Kiss, Günter H., CH-6648 Minusio (CH)
(74) Vertreter: Pfenning, Meinig & Partner

(56) Entgegenhaltungen:
- EP-A- 0 030 323
- EP-A- 0 082 673
- EP-A- 0 136 255
- EP-A- 0 443 596
- DE-A- 4 325 029
- DE-A- 4 327 320
- US-A- 4 747 355

## Beschreibung

Die Erfindung betrifft ein Verfahren zum Beseitigen organischer Schadstoffreste bei der Müllvergasung mit kohlenstoffhaltigen Reststoffen aller Art gewonnenem Synthesegas.

In der Monografie von J. Schweitzer "Thermoselect-Verfahren zur Ent- und Vergasung von Abfällen" EF-Verlag Energie und Umwelttechnik (1994) Berlin, ISBN 3-924511-47-0, ist ein neues Verfahren beschrieben, das in der einschlägigen Fachpresse unter dem Namen "Thermoselect" bekanntgeworden ist. Nach diesem Verfahren werden kohlenstoffhaltige Reststoffe, nämlich beliebiger hetererogen zusammengesetzter Müll, wie etwa üblicher Hausmüll, zunächst unter Verdichtung zumindest teilweise pyrolisiert und in beibehaltener verdichteter Form anschließend in einen Hochtemperaturreaktor eingebracht. Im Ofenschacht bildet der vorpyrolisierte brockig eingegebene Müll ein lose geschüttetes Vergasungsbett. Durch Zugabe von Sauerstoff oder von mit Sauerstoff angereicherter Luft zu der Schüttsäule des Vergasungsbettes werden die vorhandenen Kohlenstoffanteile bei im Kern des Vergasungsbettes herrschenden Temperaturen von mehr als 2000° C oxidiert bzw. vergast. Das anfallende CO₂ wird auch in einem Beruhigungsraum oberhalb der Schüttung, d.h. im Topbereich des Hochtemperaturreaktors, über dem Vergasungsbett bei Temperaturen von mindestens 1000° C überwiegend zu CO reduziert. Bei diesen Temperaturen ist das Reaktionsgleichgewicht (Boudouard'sches Gleichgewicht) zum CO hin verschoben. Aufgrund der in den Hochtemperaturreaktor miteingebrachten Müllfeuchte läuft parallel zur Boudouardschen Gleichgewichtsreaktion die Reaktion H₂O + C → CO + H₂ (Wassergasreaktion) ab. Das insgesamt entstehende Synthesegas, das stofflich und/oder energetisch sehr wirtschaftlich nutzbar ist, besteht bei einer solchen Temperaturführung überwiegend aus CO, H₂ und geringeren Anteilen an CO₂. Organische Schadstoffe, insbesondere auch die hoch giftigen Dioxine oder Furane, sind in dem fraglichen Temperaturbereich nicht mehr stabil und werden mit Sicherheit gecrackt. Die metallischen und/oder mineralischen Bestandteile des Mülls werden hingegen in der unteren Brennerzone aufgeschmolzen und aus dem Hochtemperaturreaktor abgezogen. Die hierfür erforderliche Energie liefern die exothermen Oxidationsreaktionen. Die endothermen Reaktionen cracken die organischen Verbindungen und damit insbesondere auch die Schadstoffverbindungen. Der chemische Energieinhalt und die Schadstofffreiheit des Synthesegases bilden eine sehr vorteilhafte Grundlage für seine industrielle Nutzung. Mittels Schock-Kühlung des heißen Gases wird die Neubildung organischer Schadstoffe ausgeschlossen. Das Cracken der Schadstoffe im freien Gasraum, dem sogenannten Beruhigungsraum über dem Vergasungsbett des Hochtemperaturreaktors, erfordert dort genau definierte Temperaturbedingungen in jedem Raumabschnitt und definierte Verweilzeiten.

Es sind insbesondere zwei Gegebenheiten, die den Prozeß beeinträchtigen können. Estens kann wegen der möglichen, sehr unterschiedlichen Müllzusammensetzung - vor allem bei hohem Feuchteanteil - die Temperatur des Synthesegases im Verweilraum über dem Vergasungsbett temporär absinken, und zweitens können im Verweilraum über dem Vergasungsbett sich laminare Strömungsbereiche ausbilden, die für Teilbereiche die Verweilzeit des Synthesegases herabsetzen. Diese sogenannten Gassen- oder Gassträhnenbildung müssen im Beruhigungsraum unter allen Umständen vermieden werden. In beiden Fällen ist es nämlich nicht auszuschließen, daß Spuren von Schadstoffen im Synthesegas verbleiben und bei dessen Verwertung freigesetzt werden. Bei dem derzeitigen notwendigen Bemühen, jedes erdenkliche Risiko bei Abfallbehandlungen, vor allem bei der thermischen Behandlung von Müll, zu vermeiden, stellt sich daher hier die Aufgabe, die Temperatur im Gasraum über dem Vergasungsbett des Hochtemperaturreaktors mit Sicherheit bei mindestens 1000° C zu stabilisieren und an jedem Raumpunkt laminare Strömungsbereiche in Form von Gasgassen oder -strähnen auszuschließen.

Erfindungsgemäß wird diese Aufgabe durch die im kennzeichnenden Teil des Anspruchs 1 angegebenen Merkmale gelöst.

Die Unteransprüche geben vorteilhafte Weiterbildungen dieser Aufgabenlösungan.

Dadurch, daß in den Beruhigungsraum in Form eines freien Gasraumes des Hochtemperaturreaktors zusätzlich Sauerstoff temperaturgeregelt in solchen Teilmengen eingedüst wird, kann hier die Temperatur durch eine Teilverbrennung des Synthesegases absolut konstant gehalten werden. Das Eindüsen von zusätzlichem Sauerstoff bietet darüber hinaus die Möglichkeit, die Gasströmung im Topbereich des Hochtemperaturbereiches so zu verwirbeln, daß laminare Strömungsbereiche, die die genannten "Durchgangsstraßen" für Schadstoffe bilden könnten, nicht mehr entstehen. In einfacher Weise läßt sich eine zusätzliche Turbulenz im Topbereich des Hochtemperaturreaktors dadurch erreichen, daß mehrere Sauerstoffdüsen zum Eindüsen der Sauerstoffteilmenge verwendet werden, die axial und/oder radial zum Topbereich des Hochtemperaturreaktors geneigt angeordnet werden.

Wird mindestens einer Sauerstoffdüse eine Injektionsdüse für flüssige oder gasförmige Brennstoffe zugeordnet, so läßt sich die für die Schadstoffbeseitigung notwendige Temperatur in jedem Falle, also unabhängig von anderen Parametern, aufrechterhalten.

## Patentansprüche

1. Verfahren zum Beseitigen organischer Schadstoffreste in bei der Müllvergasung anfallendem Synthesegas durch Sauerstoffzugabe, bei dem zumindest vorpyrolisierter kohlenstoffhaltiger Müll in verdichteter Form einem Hochtemperaturreaktor eingegeben wird, hier ein lose geschüttetes Vergasungsbett bildet und unterhalb dieser Schüttsäule durch O₂-Zugabe vergast wird, wobei das entstehende Synthesegas im Topbereich des Hochtemperaturreaktors nach ausreichender Verweildauer abgezogen wird,
**dadurch gekennzeichnet,**
daß in den im Topbereich in an sich bekannter Weise als Verweilzone ausgebildeten freien Gasraum des Hochtemperaturreaktors zusätzlich Sauerstoff temperaturgesteuert in solchen Teilmengen eingedüst wird, daß eine hierdurch mögliche Teilverbrennung des Synthesegases dessen Temperatur oberhalb des Vergasungsbettes konstant bei ca. 1000° C hält, und daß die Sauerstoffeindüsung so erfolgt, daß eine vollständige homogene Gasdurchmischung im Topbereich sichergestellt ist.

2. Verfahren nach Anspruch 1, dadurch gekennzeichnet, daß mehrere Sauerstoffdüsen im Topbereich des Hochtemperaturreaktors axial und/oder radial zu diesem geneigt angeordnet verwendet werden.

3. Verfahren nach Anspruch 1, dadurch gekennzeichnet, daß mindestens eine einer Sauerstoffdüse zugeordnete Injektionsdüse für flüssige oder gasförmige Brennstoffe verwendet werden.

## Claims

1. Process for the elimination by oxygen addition of organic pollutant residues in synthesis gas produced in refuse gasification, in which at least prepyrolized carbonaceous refuse is charged in compressed form into a high-temperature reactor, here a loosely packed gasification bed forms and gasification is carried out below this bed column by O₂ addition, the resultant synthesis gas being taken off after sufficient residence time in the top region of the high-temperature reactor, characterized in that into the high-temperature reactor free gas space which is developed as a dwell zone in a manner known per se in the top region, oxygen is additionally injected under temperature control in partial amounts such that a partial synthesis gas combustion made possible as a result keeps its temperature above the gasification bed constant at approximately 1000°C, and in that the oxygen is injected in such a manner that complete homogeneous gas mixing is ensured in the top region.

2. Process according to Claim 1, characterized in that use is made of a plurality of oxygen nozzles in the top region of the high-temperature reactor disposed axially and/or radially at an angle to this.

3. Process according to Claim 1, characterized in that at least one injection nozzle assigned to an oxygen nozzle is used for liquid or gaseous fuels.

## Revendications

1. Procédé d'élimination de résidus de substances organiques nocives dans le gaz de synthèse produit lors de la gazéification des ordures ménagères par addition d'oxygène, dans lequel des ordures ménagères organiques au moins pré-pyrolysées sont introduites sous forme compactée dans un réacteur à haute température, y forme un lit de gazéification en vrac meuble et est y gazéifie par addition de O₂ en dessous de cette colonne en vrac, le gaz de synthèse formé étant retiré dans la zone supérieure du réacteur à haute température après une durée de séjour suffisante, caractérisé en ce que l'on injecte en outre dans l'espace de gaz libre, conformée en zone de séjour de manière connue en soi dans la zone supérieure, du réacteur à haute température de l'oxygène en fonction de la température en quantités partielles telles qu'une combustion partielle du gaz de synthèse, ainsi rendue possible, maintienne sa température au-dessus du lit de gazéification constante à environ 1000°C, et en ce que l'injection d'oxygène se fait de telle sorte que soit assuré un mélange de gaz tout à fait homogène dans la zone supérieure.

2. Procédé selon la revendication 1, caractérisé en ce que plusieurs buses à oxygène sont utilisées dans la zone supérieure du réacteur à haute température, inclinée axialement et/ou radialement par rapport à celui-ci.

3. Procédé selon la revendication 1, caractérisé en ce qu'on utilise au moins une buse d'injection affectée à une buse à oxygène pour des combustibles liquides ou gazeux.
